# EUROPÄISCHE PATENTSCHRIFT

(11) **EP 2 676 857 B1**
(45) Veröffentlichungstag und Bekanntmachung des Hinweises auf die Patenterteilung: **01.01.2025**
(21) Anmeldenummer: 13164915.4
(22) Anmeldetag: 23.04.2013
(51) Int. Cl.: B60W 30/16, B60K 31/00, B60W 30/17

(54) **VERFAHREN UND VORRICHTUNG ZUM ERZEUGEN EINES STEUERPARAMETERS FÜR EIN BILDBASIERTES ABSTANDSASSISTENZSYSTEM EINES FAHRZEUGS**
METHOD AND APPARATUS FOR GENERATING A CONTROL PARAMETER FOR AN AIMGE-BASED DISTANCE ASSISTANCE SYSTEM OF A VEHICLE
PROCÉDÉ ET DISPOSITIF DE GÉNÉRATION D'UN PARAMÈTRE DE COMMANDE POUR UN SYSTÈME D'ASSISTANCE DE DISTANCE D'UN VÉHICULE À BASE D'IMAGES

(30) Priorität: 22.06.2012 DE 102012210608
(43) Veröffentlichungstag der Anmeldung: 25.12.2013
(73) Patentinhaber: Robert Bosch GmbH, 70442 Stuttgart (DE)
(72) Erfinder: Kasiraj, Ganesh, 88131 Lindau (DE); Hauler, Florian, 76137 Karlsruhe (DE)

(56) Entgegenhaltungen:
- WO-A2-2012/047977
- DE-A1- 102008 012 644
- DE-A1- 102008 061 301

## Beschreibung

### Stand der Technik

Die vorliegende Erfindung bezieht sich auf ein Verfahren und eine Vorrichtung zum Erzeugen eines Steuerparameters für ein Abstandsassistenzsystem eines Fahrzeugs sowie auf ein entsprechendes Computer-Programmprodukt.

Eine sogenannte Abstandsfolgefahrt bzw. Adaptive Cruise Control (ACC) ist eine Ausprägung eines Fahrerassistenzsystems in Fahrzeugen, welches Relativposition und Relativgeschwindigkeit eines sogenannten Egofahrzeugs zu einem Vorderfahrzeug bestimmen kann und durch Regelung einen Sollabstand und eine Sollrelativgeschwindigkeit mittels Bremsen und Triebstrangeingriff einstellen kann. Typischerweise werden der Relativabstand durch eine Time-of-Flight-Messung und die Relativgeschwindigkeit durch eine Dopplermessung eines Radars bestimmt. Daher sind auf dem Markt häufig radarbasierte ACC-Systeme anzutreffen.

Die DE 10 2008 061 301 A1 offenbart ein Fahrerassistenzsystem für ein Fahrzeug, umfassend einen Radarsensor, einen optischen Sensor und eine Steuereinheit, wobei der Radarsensor zur Erfassung eines Objekts im Umfeld des Fahrzeugs und zur Weiterleitung entsprechender Objektdaten an die Steuereinheit ausgeführt ist, der optische Sensor zur Erfassung von optischen Daten über das Objekt ausgeführt ist, die Steuereinheit zur Validierung der Objektdaten auf Basis der optischen Daten ausgeführt ist und das Fahrerassistenzsystem zur Durchführung eines Fahreingriffs in Abhängigkeit von der Validierung der Objektdaten ausgeführt ist.

Die WO 2012/047977 A2 offenbart ein Verfahren zum Steuern eines Fahrzeugs, wobei ein fahrzeugexternes Objekt mittels mindestens eines Sensors detektiert wird, eine Klassifikation und ein Zustand des detektierten Objekts mittels eines Prozessors bestimmt werden, ein wahrscheinliches Verhalten des detektierten Objekts basierend auf Verhaltensdaten für andere Objekte mit ähnlicher Klassifikation und ähnlichem Zustand prädiziert wird und ein Befehl bereitgestellt wird, um das Fahrzeug hinsichtlich Position und Geschwindigkeit zumindest teilweise basierend auf dem wahrscheinlichen Verhalten des detektierten Objekts zu lenken.

Die DE 10 2008 012 644 A1 offenbart einen Längsführungsassistent für Kraftfahrzeuge, mit einer Vorfeldsensorik zur Überwachung des Raumes vor dem Fahrzeug und einer Regeleinrichtung zur Regelung der Geschwindigkeit des Fahrzeugs auf eine Sollgeschwindigkeit und/oder zur Regelung des Abstands zu einem vorausfahrenden Fahrzeug auf einen Sollabstand, sowie ferner mit einer Seitenraumsensorik zur Überwachung des Raumes auf mindestens einer Seite des eigenen Fahrzeugs und einem Seitenassistenzmodul, das dazu ausgebildet ist, die Sollgeschwindigkeit und/oder den Sollabstand in Abhängigkeit von Daten der Seitenraumsensorik zu modifizieren.

### Offenbarung der Erfindung

Vor diesem Hintergrund werden mit der vorliegenden Erfindung ein verbessertes Verfahren zum Erzeugen eines Steuerparameters für ein Abstandsassistenzsystem eines Fahrzeugs, eine verbesserte Vorrichtung zum Erzeugen eines Steuerparameters für ein Abstandsassistenzsystem eines Fahrzeugs und ein verbessertes Computer-Programmprodukt gemäß den Hauptansprüchen vorgestellt. Vorteilhafte Ausgestaltungen ergeben sich aus den jeweiligen Unteransprüchen und der nachfolgenden Beschreibung.

Gemäß Ausführungsformen der vorliegenden Erfindung kann insbesondere ein Fahrerassistenzsystem für eine Abstandsfolgefahrt bzw. Adaptive Cruise Control (ACC) unter Verwendung von Umgebungsdaten gesteuert werden. Die Umgebungsdaten können beispielsweise unter Anwendung einer Objekterkennung und/oder anderer Bildverarbeitung hinsichtlich Objekten vor einem Fahrzeug bzw. Egofahrzeug ausgewertet werden. Insbesondere eine damit verbundene und dadurch ermöglichte Distanz- und Relativgeschwindigkeitsmessung dieser Objekte macht zum Beispiel ein bildbasiertes bzw. videobasiertes Abstandsassistenzsystem in vorteilhafter Weise realisierbar. Beispielsweise kann unter Miteinbeziehung einer Spurinformation, Position und gegebenenfalls Abmessung von stehenden oder bewegten Objekten sowie einer Fahrtrichtung ein Verhalten des Egofahrzeugs mittels eines derart gesteuerten, bildbasierten Abstandsassistenzsystems angepasst werden.

Ein Vorteil der vorliegenden Erfindung liegt darin, dass durch ein Verfahren und/oder eine Vorrichtung gemäß Ausführungsformen der vorliegenden Erfindung ein bildbasiertes Abstandsassistenzsystem realisierbar ist, das insbesondere eine sogenannte Abstandsfolgefahrt auf sichere, zuverlässige, komfortable und genaue Art und Weise ermöglicht. Hierbei kann auch eine Zielobjektselektion bei einem bildbasierten bzw. videobasierten Abstandsassistenzsystem verbessert werden. Beispielsweise kann durch eine Berücksichtigung von Linieninformationen, einer frei befahrbaren Fläche und einer Position des Zielfahrzeugs bezüglich eines sogenannten Fahrschlauchs des Egofahrzeugs bei einer Zielobjektauswahl ein Regelbereich einer Abstandsfolgefahrt-Funktion auf stehende bzw. stationäre Objekte erweitert werden und auch ein Regelkomfort bei Spurwechselmanövern und dergleichen erhöht werden. Anders als bei radarbasierten Abstandsassistenzsystemen bzw. ACC-Systemen können gemäß Ausführungsformen der vorliegenden Erfindung vorteilhafterweise auch stehende Fahrzeuge von anderen stehenden Objekten, wie zum Beispiel metallischen Kanalabdeckungen, unterschieden werden. Somit wird es auch möglich, stehende Objekte in die Erzeugung des Steuerparameters bzw. die ACC-Regelung miteinzubeziehen, da die Rate von falsch detektierten, stehenden Objekten vorteilhaft gering ist. Insbesondere auch im Stadtverkehr ist die Realisierung einer Zielobjektselektion unter Einbeziehung stehender Objekte vorteilhaft, da vermieden wird, dass beispielsweise ein Objekt in Gestalt eines parkenden Fahrzeugs im Fahrschlauch als Zielobjekt deklariert wird, und daher ein geregeltes Vorbeifahren ermöglicht wird.

Die vorliegende Erfindung schafft ein Verfahren zum Erzeugen eines Steuerparameters für ein Assistenzsystem eines Fahrzeugs, insbesondere ein Abstandsassistenzsystem, wobei das Verfahren in Verbindung mit einem Fahrzeug ausführbar ist, das eine in Fahrtrichtung des Fahrzeugs ausgerichtete Umgebungserfassungseinrichtung umfasst, wobei das Verfahren folgende Schritte aufweist:
Bestimmen zumindest einer Objekteigenschaft eines Objekts in einem Bereich in Fahrtrichtung vor dem Fahrzeug unter Verwendung von Umgebungsdaten von der Umgebungserfassungseinrichtung, wobei die zumindest eine Objekteigenschaft einen Bewegungszustand und eine Objektposition des Objekts bezüglich einer Fahrzeugposition des Fahrzeugs und/oder bezüglich einer Fahrbahn in dem Bereich in Fahrtrichtung vor dem Fahrzeug repräsentiert; und

Generieren des Steuerparameters in Abhängigkeit von der zumindest einen Objekteigenschaft des Objekts.

Bei dem Fahrzeug kann es sich um ein Kraftfahrzeug handeln, insbesondere ein straßengebundenes Kraftfahrzeug, wie ein Personenkraftwagen, ein Lastkraftwagen oder ein sonstiges Nutzfahrzeug. Bei dem Assistenzsystem kann es sich um ein Abstandsassistenzsystem bzw. ein Fahrerassistenzsystem handeln, das eine Funktion für eine Abstandsfolgefahrt bzw. Adaptive Cruise Control (ACC) aufweist. Der Steuerparameter ist zur Steuerung der Geschwindigkeit des Fahrzeugs geeignet, wobei der Steuerparameter zur Ansteuerung einer Geschwindigkeitsregeleinrichtung des Fahrzeugs vorgesehen ist. Die Umgebungserfassungseinrichtung kann beispielsweise in einem Innenraum des Fahrzeugs verbaut sein. Die Umgebungserfassungseinrichtung kann eine Verarbeitungseinrichtung zur Verarbeitung von Umgebungsdaten aufweisen, die von einem Sensorelement der Umgebungserfassungseinrichtung erfasst wurden. Die Umgebungserfassungseinrichtung oder die Verarbeitungseinrichtung kann ausgebildet sein, um eine Lichterkennung, Verkehrszeichenerkennung, Linienerkennung und/oder Objekterkennung durchzuführen. Die Umgebungserfassungseinrichtung kann hierbei während der Fahrt des Fahrzeugs zumindest eine Abtastung einer Umgebung des Fahrzeugs aufnehmen, wobei die Abtastung das Objekt beinhaltet. Das Objekt kann in der Abtastung mittels einer geeigneten Auswertung oder Objekterkennung erkannt werden. Die Umgebungserfassungseinrichtung kann eine Schnittstelle zum Ausgeben der Umgebungsdaten aufweisen. Das Objekt kann ein Objekt auf, über oder zumindest teilweise neben einer Fahrbahn sein, auf der sich das Fahrzeug befindet. Der Bewegungszustand des Objekts repräsentiert eine Bewegung, einen Stillstand oder eine Beschleunigung des Objekts r. Die Fahrbahn kann eine Straße mit zumindest einer Fahrspur aufweisen. Mittels der Objektposition des Objekts kann auch ein Abstand bezüglich der Fahrzeugposition des Fahrzeugs und zusätzlich oder alternativ bezüglich eines Referenzmerkmals der Fahrbahn bestimmt werden. Ferner kann auch eine zeitliche Änderung der Objektposition bestimmt werden. Insbesondere kann es sich bei der Umgebungserfassungseinrichtung um eine in Vorwärtsfahrtrichtung und/oder Rückwärtsfahrtrichtung des Fahrzeugs gerichtete Fahrzeugkamera, Bildverarbeitungseinrichtung und/oder dergleichen handeln. Im Allgemeinen kann die Umgebungserfassungseinrichtung zumindest eine von mehreren Arten von Sensorik und oder Kombinationen derselben aufweisen, welche in der Lage ist bzw. sind, Objektdaten und Fahrspurmarkierungen zu erfassen, z. B. Lidar bzw. Laserscanner, etc. Im Falle eines 3D-Systems können Umgebungsdaten sowohl für eine Vorwärtsfahrt als auch für eine Rückwärtsfahrt des Fahrzeugs erfasst werden.

Dabei kann im Schritt des Bestimmens eine Objektklasse des Objekts unter Verwendung der Umgebungsdaten als Objekteigenschaft bestimmt werden. Hierbei kann die Objektklasse ein weiteres Fahrzeug oder ein Hindernis repräsentieren. Bei dem weiteren Fahrzeug kann es sich insbesondere um ein bezüglich des Fahrzeugs direkt vorausfahrendes Fahrzeug in der gleichen Fahrspur der Fahrbahn handeln. Bei dem Hindernis kann es sich beispielsweise um ein parkendes oder haltendes Fahrzeug in einer anderen Fahrspur der Fahrbahn, um eine Person, ein Tier, ein Infrastrukturelement oder einen sonstigen Gegenstand auf oder neben der Fahrbahn und dergleichen handeln. Eine solche Ausführungsform bietet den Vorteil, dass sicher zwischen relevanten und weniger relevanten Objekten für die Erzeugung des Steuerparameters bzw. die Ansteuerung des Abstandsassistenzsystems unterschieden werden kann.

Es ist ein Schritt des Auswählens eines Objekts als Zielobjekt vorgesehen, wenn die zumindest eine Objekteigenschaft des Objekts zumindest ein Zielobjektkriterium erfüllt. Dabei wird im Schritt des Generierens ein zielobjektbezogener Steuerparameter in Abhängigkeit von der zumindest einen Objekteigenschaft des Zielobjekts generiert. Bei dem Zielobjekt kann es sich um ein Objekt handeln, das ein Bezugsobjekt für eine Abstandsfolgefahrt darstellt. Zielobjektkriterien können eine vorgebbare Objektposition, einen vorgebbaren Bewegungszustand und eine vorgebbare Objektklasse sein. So kann das Zielobjekt ein dem Fahrzeug direkt vorausfahrendes weiteres Fahrzeug sein, an dessen Zielobjektgeschwindigkeit die Fahrzeuggeschwindigkeit des Fahrzeugs mittels des Steuerparameters anpassbar ist, sodass ein definierbarer Mindestabstand zwischen dem Fahrzeug und dem Zielobjekt entlang einer Fahrtrichtung verbleibt. Eine solche Ausführungsform bietet den Vorteil, dass eine sicher und komfortabel geregelte Abstandsfolgefahrt ermöglicht wird, wobei auch ein Sicherheitsabstand zwischen dem Fahrzeug und dem Zielobjekt zuverlässig eingehalten werden kann.

Ferner kann im Schritt des Generierens der Steuerparameter in Abhängigkeit von der Fahrzeugposition des Fahrzeugs bezüglich der Fahrbahn in dem Bereich in Fahrtrichtung vor dem Fahrzeug und zusätzlich oder alternativ in Abhängigkeit von erfassten Fahrdaten des Fahrzeugs generiert werden. Dabei können im Schritt des Bestimmens die Fahrzeugposition und gegebenenfalls eine zeitliche Änderung der Fahrzeugposition bezüglich der Fahrbahn in dem Bereich in Fahrtrichtung vor dem Fahrzeug bestimmt werden. Die Fahrdaten können von einer Schnittstelle zu zumindest einem Fahrdatensensor eingelesen werden. Die Fahrdaten können eine Geschwindigkeit des Fahrzeugs, eine Beschleunigung des Fahrzeugs, einen Lenkwinkel des Fahrzeugs, eine geografische Position des Fahrzeugs und/oder weitere Fahrereingriffe oder Betriebsgrößen aufweisen. Eine solche Ausführungsform bietet den Vorteil, dass der Steuerparameter aktuell herrschende Verhältnisse hinsichtlich des Fahrzeugs und einer Umgebung genau berücksichtigen kann und somit eine Abstandsfolgefahrt sicherer und komfortabler machen kann.

Zudem kann ein Schritt des Bereitstellens des Steuerparameters an eine Schnittstelle zu einer Geschwindigkeitsregeleinrichtung des Fahrzeugs vorgesehen sein. Dabei kann der Steuerparameter ausgebildet sein, um die Geschwindigkeit des Fahrzeugs in Abhängigkeit von der zumindest einen Objekteigenschaft zu steuern. Eine solche Ausführungsform bietet den Vorteil, dass eine sicher geregelte Abstandsfolgefahrt ermöglicht wird, wobei ein Abstand zwischen dem Fahrzeug und dem Objekt zuverlässig eingehalten werden kann.

Im Schritt des Bestimmens wird die Objektposition des Objekts bezüglich eines unter Verwendung von Fahrdaten des Fahrzeugs sowie unter Verwendung der Umgebungsdaten ermittelten Fahrschlauchs des Fahrzeugs in dem Bereich in Fahrtrichtung vor dem Fahrzeug als Objekteigenschaft bestimmt. Bei dem Fahrschlauch kann es sich um eine Fahrtrajektorie bzw. einen Fahrkorridor handeln. Das Fahrzeug bewegt sich in dem Fahrschlauch, wobei der Fahrschlauch einen prädizierbaren Weg repräsentiert, den das Fahrzeug in unmittelbarer Zukunft auf der Fahrbahn zurücklegt. Der Fahrschlauch kann eine definierbare Breite, gegebenenfalls einschließlich eines Toleranzbereichs, und einen prädizierbaren bzw. berechenbaren Wegverlauf bzw. Streckenverlauf aufweisen. Dies bietet den Vorteil, dass Abstände zwischen möglichen weiteren Fahrzeugen sowie Hindernissen zu vorausgesagten, zukünftigen Fahrzeugpositionen in dem Steuerparameter frühzeitig und genau berücksichtigt werden können.

Im Schritt des Bestimmens wird die Objektposition des Objekts bezüglich einer unter Verwendung der Umgebungsdaten erkannten Fahrbahnbegrenzung und zusätzlich oder alternativ Fahrbahnmarkierung in dem Bereich in Fahrtrichtung vor dem Fahrzeug als Objekteigenschaft bestimmt werden. Die Fahrbahnbegrenzung kann einen lateralen Rand oder Randbereich der Fahrbahn bzw. Straße aufweisen oder darstellen. Die Fahrbahnmarkierung kann einen Licht reflektierenden Bereich und/oder eine sich von der Fahrbahn unterscheidende Farbe aufweisen oder darstellen. Dabei kann die Fahrbahnmarkierung einen Leitpfosten und zusätzlich oder alternativ eine Begrenzungslinie der Fahrbahn sein, beispielsweise ein Mittelstreifen oder dergleichen. Bei der Fahrbahnmarkierung kann es sich somit beispielsweise auch um eine im Wesentlichen regelmäßig unterbrochene Mittellinie der Fahrbahn oder dergleichen handeln. Falls temporär keine Fahrbahnmarkierung in den Umgebungsdaten erkennbar ist, kann die Objektposition bezüglich der letzten bekannten Fahrbahnmarkierungsposition geschätzt werden. Auf diese Weise können auch beispielsweise Fahrbahnbreite und Abstände geschätzt werden. Dies bietet den Vorteil, dass Objektpositionen insbesondere im Falle von möglichen weiteren Fahrzeugen sowie Hindernissen bei der Generierung des Steuerparameters berücksichtigt werden können, sodass eine Abstandsfolgefahrt basierend auf dem Steuerparameter zuverlässig, sicher und komfortabel erfolgen kann.

Der Schritt des Bestimmens wird unter Verwendung von Umgebungsdaten von einer Fahrzeugkamera, einer Stereo-Video-Kamera, einer Laser-Einrichtung, einer Lidar-Einrichtung und/oder einer Radar-Einrichtung als Umgebungserfassungseinrichtung ausgeführt. Bei der Umgebungserfassungseinrichtung kann es sich insbesondere um eine in Fahrtrichtung des Fahrzeugs gerichtete Kamera, Bildverarbeitungseinrichtung und/oder dergleichen handeln. Dabei kann die Umgebungserfassungseinrichtung eine Bewegtbildkamera bzw. Videokamera sein. Dies bietet den Vorteil, dass eine Bestimmung einer Fahrbahnbreite mittels Stereo-Video bzw. Motion-Stereo ermöglicht wird. Somit können erhabene Objekte von der Straßenoberfläche unterschieden werden und es wird ein frei befahrbarer Bereich bzw. eine frei befahrbare Fläche in dem Bereich in Fahrtrichtung vor dem Fahrzeug bestimmt. Auch kann eine Zielobjektposition eines Zielobjekts innerhalb des frei befahrbaren Bereichs beispielsweise unter Berücksichtigung eines Fahrschlauchs verwendet werden, um eine Geschwindigkeit des Fahrzeugs mittels des Steuerparameters vorteilhaft zu kontrollieren. Ferner kann eine Objektposition eines Objekts innerhalb, außerhalb oder am Rand des frei befahrbaren Bereichs beispielsweise unter Berücksichtigung eines Fahrschlauchs verwendet werden, um eine Geschwindigkeit des Fahrzeugs mittels des Steuerparameters vorteilhaft zu kontrollieren. Eine Freiflächenerkennung kann vorteilhaft auch mittels z. B. Lidar-Sensorik, Flashlidar-Sensorik oder dergleichen erfolgen.

Die vorliegende Erfindung schafft ferner eine Vorrichtung zum Erzeugen eines Steuerparameters für ein Assistenzsystem eines Fahrzeugs, insbesondere ein Abstandsassistenzsystem, wobei die Vorrichtung ausgebildet ist, um die Schritte des oben genannten Verfahrens durchzuführen bzw. umzusetzen. Insbesondere kann die Vorrichtung Einrichtungen aufweisen, die ausgebildet sind, um je einen Schritt des oben genannten Verfahrens auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät bzw. Steuergerät verstanden werden, das Umgebungsdaten und gegebenenfalls auch Fahrdaten verarbeitet und in Abhängigkeit davon Steuerparameter ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des oben genannten Verfahrens verwendet wird, wenn das Programm auf einem Computer oder einer Vorrichtung ausgeführt wird.

Die Erfindung wird anhand der beigefügten Zeichnungen beispielhaft näher erläutert. Es zeigen:
- Fig. 1: eine schematische Darstellung eines Fahrzeugs mit einer Vorrichtung gemäß einem Ausführungsbeispiel der vorliegenden Erfindung;
- Figuren 2 bis 4 sowie 7 bis 9: schematische Darstellungen von Verkehrssituationen;
- Figuren 5 und 6: Geschwindigkeitsverläufe von Fahrzeugen;
- Fig. 10: eine schematische Darstellung eines Signalflusses in einem Fahrzeug mit einer Vorrichtung gemäß einem Ausführungsbeispiel der vorliegenden Erfindung; und
- Fig. 11: ein Ablaufdiagramm eines Verfahrens gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

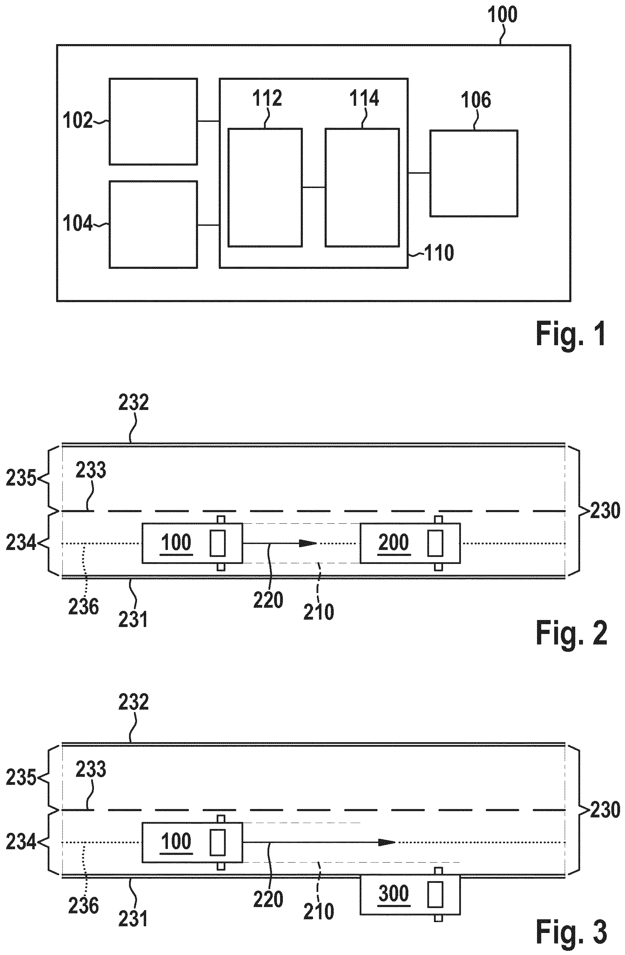

Fig. 1 zeigt eine schematische Darstellung eines Fahrzeugs 100 mit einer Vorrichtung zum Erzeugen eines Steuerparameters für ein Abstandsassistenzsystem des Fahrzeugs 100, gemäß einem Ausführungsbeispiel der vorliegenden Erfindung. Das Fahrzeug 100 weist eine Umgebungserfassungseinrichtung 102, z. B. eine Fahrzeugkamera, beispielhaft einen Fahrdatensensor 104, eine Geschwindigkeitsregeleinrichtung 106, die mit einem Abstandsassistenzsystem verbunden oder ein Teil desselben ist, und eine Vorrichtung 110 zum Erzeugen eines Steuerparameters für das Abstandsassistenzsystem des Fahrzeugs 100 bzw. eine Steuerparameter-Erzeugungsvorrichtung 110 auf. Die Steuerparameter-Erzeugungsvorrichtung 110 weist eine Bestimmungseinrichtung 112 und eine Generiereinrichtung 114 auf. Die Steuerparameter-Erzeugungsvorrichtung 110 ist mittels einer Kommunikationsschnittstelle, beispielsweise einer elektrischen Leitung, Funk oder dergleichen, direkt oder indirekt über weitere Einrichtungen und/oder Schnittstellen mit der Umgebungserfassungseinrichtung 102, dem Fahrdatensensor 104 und der Geschwindigkeitsregeleinrichtung 106 verbunden.

Die Umgebungserfassungseinrichtung 102 ist gemäß dem in Fig. 1 dargestellten Ausführungsbeispiel der vorliegenden Erfindung in Gestalt einer Fahrzeugkamera in dem Fahrzeug 100 angeordnet und eine Blickrichtung der Fahrzeugkamera ist im Wesentlichen in Fahrtrichtung des Fahrzeugs ausgerichtet. Somit ist die Umgebungserfassungseinrichtung 102 ausgebildet, um ein Bild eines Bereichs in Fahrtrichtung vor dem Fahrzeug 100 aufzunehmen und zu dem Bild gehörende Bilddaten als Umgebungsdaten bereitzustellen.

Der Fahrdatensensor 104 kann zumindest eine Einrichtung zur Erfassung von Fahrdaten beispielsweise in Gestalt einer Geschwindigkeit, einer Beschleunigung, eines Lenkwinkels, einer geografischen Position und/oder weiterer Fahrereingriffe, Zustandsgrößen oder Betriebsgrößen des Fahrzeugs 100 aufweisen. Der Fahrdatensensor 104 ist ausgebildet, um die Fahrdaten bereitzustellen.

Die Steuerparameter-Erzeugungsvorrichtung 110 ist ausgebildet, um die Umgebungsdaten von der Umgebungserfassungseinrichtung 102 und gegebenenfalls die Fahrdaten von dem Fahrdatensensor 104 zu empfangen bzw. einzulesen. Die Bestimmungseinrichtung 112 der Steuerparameter-Erzeugungsvorrichtung 110 ist ausgebildet, um zumindest eine Objekteigenschaft eines Objekts in einem Bereich in Fahrtrichtung vor dem Fahrzeug 100 unter Verwendung von Umgebungsdaten von der Umgebungserfassungseinrichtung 102 zu bestimmen. Dabei repräsentiert die zumindest eine Objekteigenschaft einen Bewegungszustand und eine Objektposition des Objekts bezüglich einer Fahrzeugposition des Fahrzeugs 100 und/oder bezüglich einer Fahrbahn in dem Bereich in Fahrtrichtung vor dem Fahrzeug 100. Die Bestimmungseinrichtung 112 kann auch ausgebildet sein, um zu bestimmen, ob es sich bei einem unter Verwendung der Umgebungsdaten erkannten Objekt um ein Zielobjekt, an das eine Geschwindigkeit des Fahrzeugs 100 angepasst werden soll, oder ein sonstiges Objekt handelt. Die Generiereinrichtung 114 der Steuerparameter-Erzeugungsvorrichtung 110 ist ausgebildet, um den Steuerparameter in Abhängigkeit von der zumindest einen bestimmten Objekteigenschaft des Objekts zu generieren. Auch kann die Generiereinrichtung 114 ausgebildet sein, um den Steuerparameter zusätzlich oder alternativ in Abhängigkeit von Fahrdaten von dem Fahrdatensensor 104 zu generieren. Die Steuerparameter-Erzeugungsvorrichtung 110 ist ausgebildet, um den Steuerparameter bereitzustellen.

Die Geschwindigkeitsregeleinrichtung 106 ist ausgebildet, um den Steuerparameter von der Steuerparameter-Erzeugungsvorrichtung 110 zu empfangen bzw. einzulesen. Auch ist die Geschwindigkeitsregeleinrichtung 106 ausgebildet, um bei einer aktivierten Abstandsfolgefahrtfunktion eine Geschwindigkeit des Fahrzeugs 100 gegebenenfalls in Zusammenwirkung mit dem Abstandsassistenzsystem oder im Rahmen desselben basierend auf dem Steuerparameter zu steuern. Somit kann eine Geschwindigkeit des Fahrzeugs 100 bzw. eine Abstandsfolgefahrt mittels des Steuerparameters an ein Objekt in einem Bereich in Fahrtrichtung vor dem Fahrzeug 100 bzw. eine Objekteigenschaft desselben angepasst werden.

Fig. 2 zeigt eine schematische Darstellung einer Verkehrssituation. Gezeigt sind ein Fahrzeug 100 bzw. Ego-Fahrzeug, bei dem es sich um das Fahrzeug aus Fig. 1 handelt, ein Zielobjekt oder Ziel in Gestalt eines weiteren Fahrzeugs 200 bzw. Zielfahrzeugs, ein Fahrschlauch 210 des Fahrzeugs 100, eine Fahrtrichtung 220 bzw. ein Bewegungsvektor des Fahrzeugs 100, eine Fahrbahn 230 bzw. Straße, eine erste Fahrbahnbegrenzung 231, eine zweite Fahrbahnbegrenzung 232, eine Fahrbahnmarkierung 233 in Gestalt eines Mittelstreifens, eine erste Fahrspur 234, eine zweite Fahrspur 235 und eine Fahrspurmittellinie 236 der ersten Fahrspur 234.

Die Fahrbahn 230 ist durch die erste Fahrbahnbegrenzung 231 und die zweite Fahrbahnbegrenzung 232 lateral begrenzt. Die Fahrbahn 230 ist durch die Fahrbahnmarkierung 233 in die erste Fahrspur 234 und die zweite Fahrspur 235 unterteilt. Das Fahrzeug 100 und das weitere Fahrzeug 200 befinden sich auf der ersten Fahrspur 234 der Fahrbahn 230. Dabei befindet sich das weitere Fahrzeug 200 in der Fahrtrichtung 220 vor dem Fahrzeug 100. Das Fahrzeug 100 und das weitere Fahrzeug 200 sind entlang der Fahrspurmittellinie 236 der ersten Fahrspur 234 angeordnet. Der Fahrschlauch 210 des Fahrzeugs 100 erstreckt sich in Fahrtrichtung 220 von dem Fahrzeug 100 zu dem weiteren Fahrzeug 200 hin. Eine Breite des Fahrschlauchs 210 quer zu der Fahrtrichtung 220 entspricht beispielhaft einer Breite des Fahrzeugs 100 quer zu der Fahrtrichtung 220.

Bei der in Fig. 2 dargestellten Verkehrssituation ist das weitere Fahrzeug 200 stationär und bewegt sich das Fahrzeug 100 auf das weitere Fahrzeug 200 zu. Mittels der Steuerparameter-Erzeugungsvorrichtung des Fahrzeugs 100 wurde erkannt, dass es sich bei dem weiteren Fahrzeug 200 um ein Zielobjekt handelt. Die Steuerparameter-Erzeugungsvorrichtung des Fahrzeugs 100 erzeugt einen Steuerparameter, der bewirkt, dass die Geschwindigkeit des Fahrzeugs 100 so gesteuert wird, dass das Fahrzeug 100 zum Stehen kommt, wobei zwischen dem Fahrzeug 100 und dem weiteren Fahrzeug 200 ein Sicherheitsabstand verbleibt. Somit zeigt Fig. 2 einen häufigen Fall bzw. Standardfall für ein Abstandsassistenzsystem. Die Steuerparameter-Erzeugungsvorrichtung des Fahrzeugs 100 ermöglicht eine Zielobjektselektion, wobei ein Zielobjekt bestimmt bzw. erkannt wird, sodass ein Abstandsassistenzsystem, z. B: für Abstandsfolgefahrt, das Fahrzeug 100 bis in den Stand regelt, da sich das weitere Fahrzeug 200 bereits im Stand befindet.

Fig. 3 zeigt eine schematische Darstellung einer weiteren Verkehrssituation. Hierbei entspricht die Darstellung in Fig. 3 der Darstellung aus Fig. 2 mit der Ausnahme, dass statt eines Zielobjekts hier ein Objekt bzw. Hindernis in Gestalt eines weiteren Fahrzeugs 300 bzw. Objektfahrzeugs gezeigt ist. Bei dem Fahrzeug 100 handelt es sich um das Fahrzeug aus Fig. 1 bzw. Fig. 2. Das weitere Fahrzeug 300 ist beispielhaft parkend in einem Bereich der ersten Fahrbahnbegrenzung 231 angeordnet. Dabei erstreckt sich das weitere Fahrzeug 300 von einem Bereich außerhalb der Fahrbahn 230 teilweise über die erste Fahrbahnbegrenzung 231 in die erste Fahrspur 234. Dabei ist das weitere Fahrzeug 300 bezüglich der Fahrtrichtung 220 des Fahrzeugs 100 lateral von dem Fahrschlauch 210 des Fahrzeugs 100 beabstandet angeordnet. Somit ist das weitere Fahrzeug 300 außerhalb des Fahrschlauchs 210 des Fahrzeugs 100 geparkt.

Bei der in Fig. 3 dargestellten Verkehrssituation ist das weitere Fahrzeug 300 stationär und bewegt sich das Fahrzeug 100 auf das weitere Fahrzeug 300 zu. Aufgrund eines lateralen Versatzes der Fahrzeuge 100 und 300 zueinander kann sich das Fahrzeug 100 an dem Fahrzeug 300 seitlich vorbeibewegen. Mittels der Steuerparameter-Erzeugungsvorrichtung des Fahrzeugs 100 wurde erkannt, dass es sich bei dem weiteren Fahrzeug 300 um ein Objekt oder Hindernis handelt. Die Steuerparameter-Erzeugungsvorrichtung des Fahrzeugs 100 erzeugt einen Steuerparameter, der bewirkt, dass die Geschwindigkeit des Fahrzeugs 100 so gesteuert wird, dass das Fahrzeug 100 von dem weiteren Fahrzeug 300 unbeeinflusst bleibt, bzw. dass die Geschwindigkeit des Fahrzeugs 100 nicht an das parkende Objekt angepasst wird.

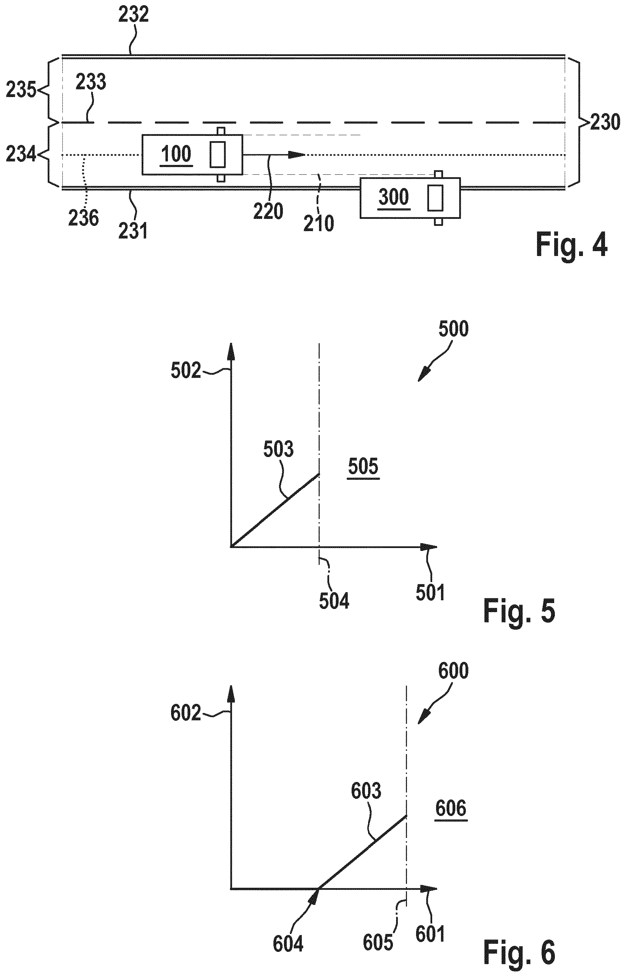

Fig. 4 zeigt eine schematische Darstellung noch einer weiteren Verkehrssituation. Hierbei entspricht die Darstellung in Fig. 4 der Darstellung aus Fig. 3 mit der Ausnahme, dass das Objekt bzw. Hindernis in Gestalt des weiteren Fahrzeugs 300 in den Fahrschlauch 210 des Fahrzeugs 100 hineinragend geparkt ist. Bei dem Fahrzeug 100 handelt es sich um das Fahrzeug aus Fig. 1, Fig. 2 bzw. Fig. 3. Bei der in Fig. 4 dargestellten Verkehrssituation ist das weitere Fahrzeug 300 stationär und bewegt sich das Fahrzeug 100 auf das weitere Fahrzeug 300 zu. Aufgrund eines lateralen Versatzes der Fahrzeuge 100 und 300 zueinander kann sich das Fahrzeug 100 an dem Fahrzeug 300 lediglich bedingt vorbeibewegen. Mittels der Steuerparameter-Erzeugungsvorrichtung des Fahrzeugs 100 wurde erkannt, dass es sich bei dem weiteren Fahrzeug 300 um ein Objekt oder Hindernis handelt. Die Steuerparameter-Erzeugungsvorrichtung des Fahrzeugs 100 erzeugt einen Steuerparameter, der bewirkt, dass die Geschwindigkeit des Fahrzeugs 100 reduziert wird, um ein sicheres Passieren des weiteren Fahrzeugs 300 zu ermöglichen.

Fig. 5 zeigt eine Darstellung 500 einer Geschwindigkeit eines Fahrzeugs in Abhängigkeit von einem lateralen Abstand zu einem weiteren Fahrzeug. Dabei ist die Geschwindigkeit des Fahrzeugs durch ein Abstandsassistenzsystem gesteuert. Bei der Darstellung 500 handelt es sich um ein kartesisches Koordinatensystem. Gezeigt sind ein an einer Abszissenachse der Darstellung 500 aufgetragener lateraler Abstand 501 zu einem weiteren Fahrzeug bzw. Nachbarfahrzeug, eine an einer Ordinatenachse der Darstellung 500 aufgetragene maximale Geschwindigkeit 502 eines Fahrzeugs bzw. Ego-Fahrzeugs (Max v_{ego}), ein Geschwindigkeitsverlauf 503 bzw. Graph, eine sich parallel zur Ordinatenachse erstreckende Trennlinie 504 und ein unbeschränkter Geschwindigkeitsbereich 505. Der Geschwindigkeitsverlauf 503 beginnt im Ursprung des Koordinatensystems der Darstellung 500 und steigt in positiver Abszissenachsenrichtung bis zu der Trennlinie 504 beispielhaft linear an. Somit steigt die maximale Geschwindigkeit 502 mit zunehmendem lateralen Abstand 501 bis zu der Trennlinie 504. Bei Abständen größer einem Grenzabstand an der Trennlinie liegt der unbeschränkte Geschwindigkeitsbereich 505 vor. Somit kann die maximale Geschwindigkeit 502 bei lateralen Abständen größer dem Grenzabstand theoretisch unbegrenzt sein. Es ergibt sich eine abstandsabhängige Zielgeschwindigkeitsreduktion eines Fahrzeugs bei einem Vorbeifahren an einem stehenden Fahrzeug.

Fig. 6 zeigt eine Darstellung 600 einer Geschwindigkeit eines Fahrzeugs in Abhängigkeit von einer frei befahrbaren Fläche, die sich aus einer Fahrbahnbreite und einer Eintauchbreite eines Objekts, z. B. eines stehenden Fahrzeugs, ergibt. Dabei ist die Geschwindigkeit des Fahrzeugs durch ein Abstandsassistenzsystem gesteuert, das einen Steuerparameter verwendet, der von einer Vorrichtung wie der Steuerparameter-Erzeugungsvorrichtung aus Fig. 1 erzeugt ist. Bei der Darstellung 600 handelt es sich um ein kartesisches Koordinatensystem. Gezeigt sind eine an einer Abszissenachse der Darstellung 600 aufgetragene frei befahrbare Fläche 601, eine an einer Ordinatenachse der Darstellung 600 aufgetragene maximale Geschwindigkeit 602 eines Fahrzeugs bzw. Ego-Fahrzeugs (Max v_{ego}), ein Geschwindigkeitsverlauf 603 bzw. Graph, ein Abszissenabschnitt 604, der einer Breite des Ego-Fahrzeugs entspricht, eine sich parallel zur Ordinatenachse erstreckende Trennlinie 605 und ein unbeschränkter Geschwindigkeitsbereich 606. Der Geschwindigkeitsverlauf 603 beginnt an dem Abszissenabschnitt 604 und steigt in positiver Abszissenachsenrichtung bis zu der Trennlinie 605 beispielhaft linear an. Somit steigt die maximale Geschwindigkeit 602 mit zunehmender frei befahrbarer Fläche 601 bis zu der Trennlinie 605. Bei Flächen größer einer an der Trennlinie 605 vorliegenden Fläche liegt der unbeschränkte Geschwindigkeitsbereich 606 vor. Somit kann die maximale Geschwindigkeit 602 bei frei befahrbaren Flächen größer der Fläche an der Trennlinie 605 theoretisch unbegrenzt sein. Es ergibt sich erfindungsgemäß eine Zielgeschwindigkeitsreduktion bei einem Vorbeifahren an einem stehenden Fahrzeug unter Berücksichtigung der frei befahrbaren Fläche. So kann eine höhere Maximalgeschwindigkeit erreicht werden.

Unter Bezugnahme auf die Figuren 1 bis 6 werden im Folgenden kurz verschiedene Szenarien gemäß Ausführungsbeispielen der vorliegenden Erfindung erörtert. Wenn das Fahrzeug 100 bzw. Egofahrzeug direkt auf das stehende Fahrzeug 200 zufährt, wie es in Fig. 2 dargestellt ist, bewirkt das Abstrandassistenzsystem bzw. der ACC-Regler unter Verwendung des Steuerparameters der Steuerparameter-Erzeugungsvorrichtung 110, dass das Fahrzeug 100 rechtzeitig vor dem Zielobjekt bzw. Zielfahrzeug 200 zum Halten kommt. Wenn das Fahrzeug 100 bzw. Egofahrzeug sehr knapp an einem Hindernis oder Objekt bzw. weiteren Fahrzeug 300 vorbeifahren wird, weil der frei befahrbare Bereich sehr klein ist, so bewirkt das Abstrandassistenzsystem bzw. der ACC-Regler unter Verwendung des Steuerparameters der Steuerparameter-Erzeugungsvorrichtung 110, dass eine maximale Geschwindigkeit durch das Fahrzeug 100 nicht überschritten wird. Wenn genügend Platz zwischen dem stehenden Fahrzeug 300 und dem Egofahrzeug 100 und genügend Platz zur Gegenfahrbahn ist, kann eine von einem Standard-ACC- Regler geforderte Geschwindigkeit eingestellt werden.

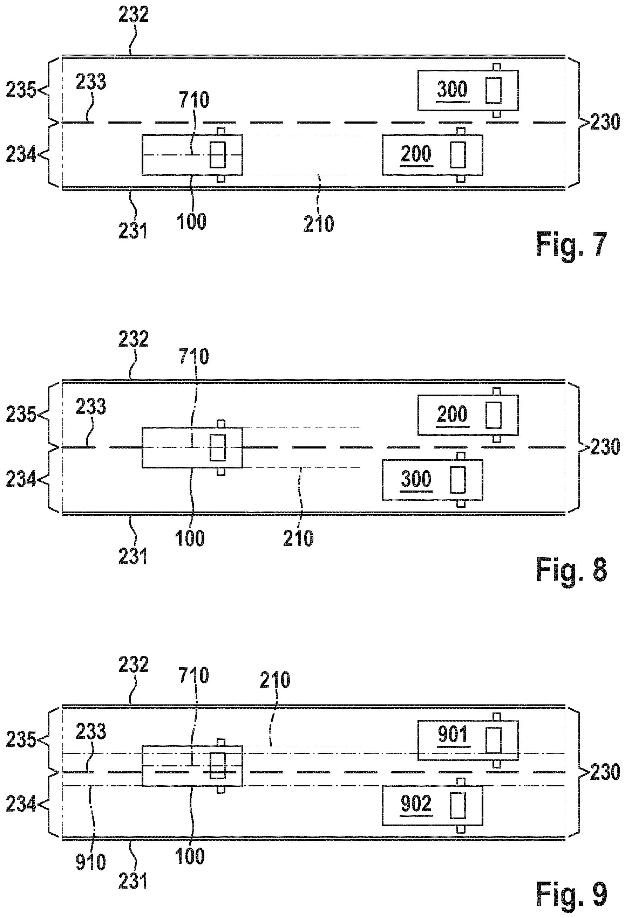

Fig. 7 zeigt eine schematische Darstellung einer Verkehrssituation. Hierbei entspricht die Darstellung in Fig. 7 der Darstellung aus Fig. 2 mit der Ausnahme, dass zusätzlich zu dem Zielfahrzeug 200 hier ein Objekt in Gestalt eines weiteren Fahrzeugs bzw. Objektfahrzeugs 300 gezeigt ist, dass die Fahrspurmittellinie der ersten Fahrspur 234 hier weggelassen ist und dass eine Fahrzeuglängsachse 710 des Fahrzeugs 100 dargestellt ist. Bei dem Fahrzeug 100 handelt es sich um das Fahrzeug aus Fig. 1, Fig. 2, Fig. 3 bzw. Fig. 4. Das Zielfahrzeug 200 bewegt sich in der ersten Fahrspur 234 in Fahrtrichtung vor dem Fahrzeug 100 in die gleiche Richtung wie das Fahrzeug 100. Das Objektfahrzeug 300 bewegt sich in der zweiten Fahrspur 235 in Fahrtrichtung vor dem Fahrzeug 100 in die gleiche Richtung wie das Fahrzeug 100. Hierbei ist das Objektfahrzeug 300 beispielhaft weiter von dem Fahrzeug 100 beabstandet als das Zielfahrzeug 200. Mittels der Steuerparameter-Erzeugungsvorrichtung des Fahrzeugs 100 wurden das Zielfahrzeug 200 und das Objektfahrzeug 300 erkannt. Die Steuerparameter-Erzeugungsvorrichtung des Fahrzeugs 100 erzeugt einen Steuerparameter, der bewirkt, dass die Geschwindigkeit des Fahrzeugs 100 an eine Geschwindigkeit des Zielfahrzeugs 200 unter Einhaltung eines Sicherheitsabstandes angepasst wird.

Fig. 8 zeigt eine schematische Darstellung einer weiteren Verkehrssituation. Hierbei entspricht die Darstellung in Fig. 8 der Darstellung aus Fig. 7 mit der Ausnahme, dass hier das weitere Fahrzeug in der ersten Fahrspur 234 mittels der Steuerparameter-Erzeugungsvorrichtung des Fahrzeugs 100 als das Objektfahrzeug 300 erkannt wurde, dass das weitere Fahrzeug in der zweiten Fahrspur 235 mittels der Steuerparameter-Erzeugungsvorrichtung des Fahrzeugs 100 als das Zielfahrzeug 200 erkannt wurde und dass das Fahrzeug 100 sich von einer mittigen Position innerhalb der ersten Fahrspur 234 teilweise in die zweite Fahrspur 235 bewegt hat, wobei die Fahrzeuglängsachse 710 des Fahrzeugs 100 die Fahrbahnmarkierung 233 überquert hat und in der zweiten Fahrspur 235 angeordnet ist. Bei dem Fahrzeug 100 handelt es sich um das Fahrzeug aus Fig. 1, Fig. 2, Fig. 3, Fig. 4 bzw. Fig. 7. Hierbei kann beispielsweise ein Abstand des Fahrzeugs 100 zu dem Objektfahrzeug 300 auch reduziert werden, um ein Überholmanöver zu unterstützen und ein dynamisches Fahrgefühl erzeugen.

Unter Bezugnahme auf die Figuren 7 und 8 sowie unter Rückbezug auf Fig. 1 wird im Folgenden kurz ein Zielobjektwechsel bei Überschreiten einer Fahrbahnmarkierung beispielsweise auf einer Autobahn oder anderen mehrspurigen Fahrbahn erläutert. Auch außerhalb eines Anwendungsbereichs hinsichtlich stehender Objekte nutzen Spurinformationen bei der Zielobjektauswahl. So können Zielfahrzeug 200 und Objektfahrzeug 300 bei Fahrspurwechsel z. B. auf Autobahnen mittels der Umgebungserfassungseinrichtung 102 und der Steuerparameter-Erzeugungsvorrichtung 110 des Fahrzeugs 100 schnell und zuverlässig einer Fahrspur 234 oder 235 zugeordnet werden. Überschreitet das Egofahrzeug 100 die Fahrbahnmarkierung 233 mit der Fahrzeuglängsachse 710, so kann das Egofahrzeug 100 einer anderen Fahrspur zugeordnet werden und das Zielfahrzeug 200 kann wechseln. Zudem kann ein Fahrspurwechsel früher erkannt werden, wenn eine Lateralgeschwindigkeit des Fahrzeugs 100 zur Fahrbahnmarkierung 233 ausgewertet wird. Bewegt sich das Egofahrzeug 100 mit einer Lateralgeschwindigkeit v > v_{Grenz}, sodass die Fahrbahnmarkierung 233 innerhalb einer definierten Zeit überschritten wird (TOL: Time-to-Line-Crossing), so kann früher auf ein Spurwechselmanöver geschlossen werden und das Zielfahrzeug 200 früher wechseln.

Fig. 9 zeigt eine schematische Darstellung einer Verkehrssituation. Hierbei entspricht die Darstellung in Fig. 9 der Darstellung aus Fig. 8 mit der Ausnahme, dass hier das weitere Fahrzeug in der ersten Fahrspur 234 mittels der Steuerparameter-Erzeugungsvorrichtung des Fahrzeugs 100 als ein erstes Zielfahrzeug 901 erkannt wurde, dass das weitere Fahrzeug in der zweiten Fahrspur 235 mittels der Steuerparameter-Erzeugungsvorrichtung des Fahrzeugs 100 als ein zweites Zielfahrzeug 902 erkannt wurde und dass ein Übergangsbereich 910 gezeigt ist, der sich zu beiden Seiten entlang der Fahrbahnmarkierung 233 erstreckt und eine Breite aufweist, die beispielhaft geringer als eine Breite einer der Fahrspuren 234 und 235 ist. Bei dem Fahrzeug 100 handelt es sich um das Fahrzeug aus Fig. 1, Fig. 2, Fig. 3, Fig. 4, Fig. 7 bzw. Fig. 8. Das Fahrzeug 100 befindet sich teilweise in dem Übergangsbereich 910. Die Steuerparameter-Erzeugungsvorrichtung des Fahrzeugs 100 erzeugt einen Steuerparameter, der bewirkt, dass von beiden Zielfahrzeugen 901 und 902 beeinflussbar ist, wobei die Geschwindigkeit des Fahrzeugs 100 an jenes der Zielfahrzeuge 901 und 902 angepasst wird, das den geringeren Abstand zu dem Fahrzeug 100 und die geringere Geschwindigkeit aufweist. Somit ergibt sich im Übergangsbereich 910 eine Regelung auf zwei Zielfahrzeuge 901 und 902. So können in dem Übergangsbereich 910 beider Fahrspuren 234 und 235 auch beide weiteren Fahrzeuge für die Regelung als Zielfahrzeuge 901 und 902 ausgewählt werden, wobei die geringste Distanz und die geringste Geschwindigkeit beider Fahrzeuge zum Tragen kommen. Hierbei kann beispielsweise ein Abstand des Fahrzeugs 100 zu mindestens einem der Zielfahrzeuge 901 und 902 auch reduziert werden, um ein Überholmanöver zu unterstützen und ein dynamisches Fahrgefühl erzeugen.

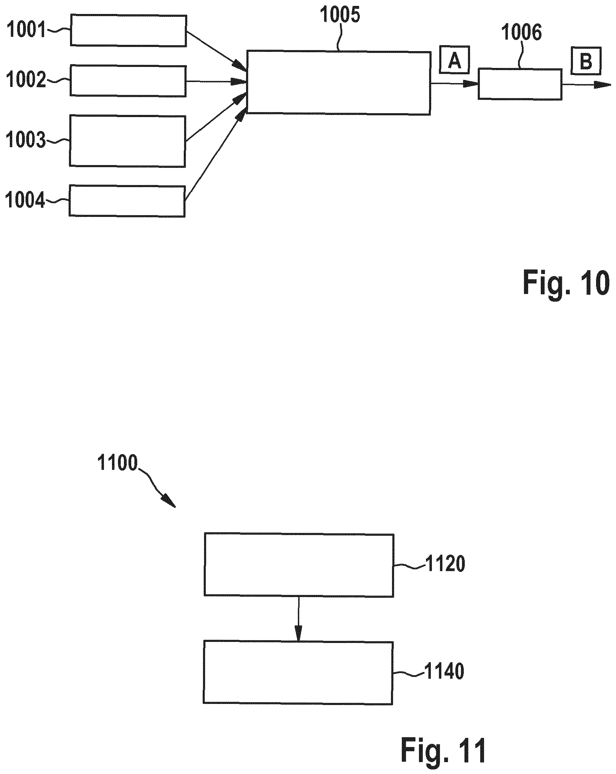

Fig. 10 zeigt ein Signal-Flussdiagramm in einem Fahrzeug mit einer Vorrichtung gemäß einem Ausführungsbeispiel der vorliegenden Erfindung. Bei dem Fahrzeug kann es sich um das Fahrzeug aus Fig. 1, Fig. 2, Fig. 3, Fig. 4, Fig. 7, Fig. 8 bzw. Fig. 9 handeln. Bei der Vorrichtung kann es sich um die Steuerparameter-Erzeugungsvorrichtung aus Fig. 1 handeln. Gezeigt sind in Fig. 10 Informationen 1001 zur Liniendetektion, Informationen 1002 zur Objektdetektion, Informationen 1003 zur Detektion der frei befahrbaren Fläche und Informationen 1004 der Inertialsensorik sowie zum Lenkwinkel. Diese Informationen 1001, 1002, 1003 und 1004 werden einer Vorrichtung 1005 zur Zielobjektauswahl und Geschwindigkeitslimitierung zugeführt, die beispielsweise zumindest zum Teil der Steuerparameter-Erzeugungsvorrichtung entsprechen kann. Dort wird die Zielobjektauswahl durchgeführt. An einer Schnittstelle bei einem Punkt A werden Zielobjektdistanz und Relativgeschwindigkeit sowie eine Geschwindigkeitslimitierung an ein Abstandsassistenzsystem 1006, z. B. einen ACC-Regler, weitergereicht. Bei Punkt B werden Regelinformationen, z. B. eine Sollbeschleunigung, an Triebstrang und Bremse weitergeben. Es kann auch eine Verknüpfung mit Eingabedaten von einer Benutzerschnittstelle vorgesehen sein, wobei z. B. eine Aktivierung des Abstandsassistenzsystems 1006, eine etwaige Bestätigung einer Zielobjektauswahl und/oder dergleichen ermöglicht werden können.

Fig. 11 zeigt ein Ablaufdiagramm eines Verfahrens 1100 zum Erzeugen eines Steuerparameters für ein Abstandsassistenzsystem eines Fahrzeugs, gemäß einem Ausführungsbeispiel der vorliegenden Erfindung. Dabei ist das Verfahren 1100 in Verbindung mit einem Fahrzeug ausführbar, das eine in Fahrtrichtung des Fahrzeugs ausgerichtete Umgebungserfassungseinrichtung umfasst. Somit ist das Verfahren 1100 beispielsweise in Verbindung mit dem Fahrzeug aus einer der Figuren 1 bis 4 sowie 7 bis 9 ausführbar. Das Verfahren 1100 weist einen Schritt des Bestimmens 1120 zumindest einer Objekteigenschaft eines Objekts in einem Bereich in Fahrtrichtung vor dem Fahrzeug unter Verwendung von Umgebungsdaten von der Umgebungserfassungseinrichtung auf. Hierbei repräsentiert die zumindest eine Objekteigenschaft einen Bewegungszustand und eine Objektposition des Objekts bezüglich einer Fahrzeugposition des Fahrzeugs und zusätzlich oder alternativ bezüglich einer Fahrbahn in dem Bereich in Fahrtrichtung vor dem Fahrzeug. Auch weist das Verfahren 1100 einen Schritt des Generierens 1140 des Steuerparameters in Abhängigkeit von der zumindest einen Objekteigenschaft des Objekts auf. Das Verfahren 1100 kann in Verbindung mit der Vorrichtung aus Fig. 1 vorteilhaft ausgeführt werden. Somit kann die Vorrichtung aus Fig. 1 ausgebildet sein, um die Schritte des Verfahrens 1100 auszuführen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

## Patentansprüche

1. Verfahren (1100) zum Erzeugen eines Steuerparameters für ein bildbasiertes Abstandsassistenzsystem eines Fahrzeugs (100), wobei das Verfahren (1100) in Verbindung mit einem Fahrzeug (100) ausführbar ist, das eine in Fahrtrichtung des Fahrzeugs (100) ausgerichtete Umgebungserfassungseinrichtung (102) umfasst, wobei das Verfahren (1100) folgende Schritte aufweist:
Bestimmen (1120) zumindest einer Objekteigenschaft eines Objekts (200, 300) in einem Bereich in Fahrtrichtung vor dem Fahrzeug (100) unter Verwendung von Umgebungsdaten von der Umgebungserfassungseinrichtung (102),
wobei die zumindest eine Objekteigenschaft einen Bewegungszustand und eine Objektposition des Objekts (200, 300) bezüglich einer Fahrzeugposition des Fahrzeugs (100) und/oder bezüglich einer Fahrbahn (230) in dem Bereich in Fahrtrichtung vor dem Fahrzeug (100) repräsentiert,
wobei der Bewegungszustand des Objekts (200, 300) eine Bewegung, einen Stillstand oder eine Beschleunigung des Objekts (200, 300) repräsentiert,
wobei die Objektposition des Objekts (200, 300) bezüglich einer unter Verwendung der Umgebungsdaten erkannten Fahrbahnbegrenzung (231, 232) und/oder Fahrbahnmarkierung (233) in dem Bereich in Fahrtrichtung vor dem Fahrzeug (100) als Objekteigenschaft bestimmt wird,
wobei die Objektposition des Objekts (200, 300) bezüglich eines unter Verwendung von Fahrdaten des Fahrzeugs (100) sowie unter Verwendung der Umgebungsdaten ermittelten Fahrschlauchs (210) des Fahrzeugs (100) in dem Bereich in Fahrtrichtung vor dem Fahrzeug (100) als Objekteigenschaft bestimmt wird,
wobei der Schritt des Bestimmens (1120) unter Verwendung von Umgebungsdaten von einer Fahrzeugkamera, einer Stereo-Video-Kamera, einer Laser-Einrichtung und/oder einer Lidar-Einrichtung als Umgebungserfassungseinrichtung (102) ausgeführt wird,
wobei ein frei befahrbarer Bereich (601) in dem Bereich in Fahrtrichtung vor dem Fahrzeug (100) bestimmt wird;
Auswählen eines Objekts als Zielobjekt (200), wenn die zumindest eine Objekteigenschaft des Objekts zumindest ein Zielobjektkriterium erfüllt; und
Generieren (1140) des Steuerparameters in Abhängigkeit von der zumindest einen Objekteigenschaft des Objekts (200, 300),
wobei ein zielobjektbezogener Steuerparameter in Abhängigkeit von der zumindest einen Objekteigenschaft des Zielobjekts (200) generiert wird, wobei eine Objektposition eines Objekts (200, 300) innerhalb, außerhalb oder am Rand des frei befahrbaren Bereichs (601) unter Berücksichtigung des Fahrschlauchs (210) verwendet wird, um eine Geschwindigkeit des Fahrzeugs (100) mittels des Steuerparameters zu kontrollieren, wobei sich eine Zielgeschwindigkeitsreduktion bei einem Vorbeifahren an einem stehenden Fahrzeug unter Berücksichtigung des frei befahrbaren Bereichs (601) ergibt.

2. Verfahren (1100) gemäß Anspruch 1, bei dem im Schritt des Bestimmens (1120) eine Objektklasse des Objekts (200, 300) unter Verwendung der Umgebungsdaten als Objekteigenschaft bestimmt wird, wobei die Objektklasse ein weiteres Fahrzeug oder ein Hindernis repräsentiert.

3. Verfahren (1100) gemäß einem der vorangegangenen Ansprüche, bei dem im Schritt des Generierens (1140) der Steuerparameter in Abhängigkeit von der Fahrzeugposition des Fahrzeugs (100) bezüglich der Fahrbahn (230) in dem Bereich in Fahrtrichtung vor dem Fahrzeug (100) und/oder in Abhängigkeit von erfassten Fahrdaten des Fahrzeugs (100) generiert wird.

4. Verfahren (1100) gemäß einem der vorangegangenen Ansprüche, mit einem Schritt des Bereitstellens des Steuerparameters an eine Schnittstelle zu einer Geschwindigkeitsregeleinrichtung (106) des Fahrzeugs (100).

5. Vorrichtung (110) zum Erzeugen eines Steuerparameters für ein bildbasiertes Abstandsassistenzsystem eines Fahrzeugs (100), wobei die Vorrichtung (110) ausgebildet ist, um die Schritte eines Verfahrens (1100) gemäß einem der Ansprüche 1 bis 4 durchzuführen.

6. Computer-Programmprodukt mit Programmcode zur Durchführung eines Verfahrens (1100) nach einem der Ansprüche 1 bis 4, wenn das Programm auf einer Vorrichtung (110) ausgeführt wird.

## Claims

1. Method (1100) for generating a control parameter for an image-based distance assistance system of a vehicle (100), wherein the method (1100) is able to be carried out in conjunction with a vehicle (100) comprising a surroundings detection device (102) oriented in the direction of travel of the vehicle (100), wherein the method (1100) comprises the following steps:
determining (1120) at least one object property of an object (200, 300) in an area in front of the vehicle (100) in the direction of travel using surroundings data from the surroundings detection device (102),
wherein the at least one object property represents a movement state and an object position of the object (200, 300) with respect to a vehicle position of the vehicle (100) and/or with respect to a roadway (230) in the area in front of the vehicle (100) in the direction of travel,
wherein the movement state of the object (200, 300) represents a movement, a standstill or an acceleration of the object (200, 300),
wherein the object position of the object (200, 300) with respect to a roadway boundary (231, 232) and/or roadway marking (233), recognized using the surroundings data, in the area in front of the vehicle (100) in the direction of travel is determined as object property,
wherein the object position of the object (200, 300) with respect to a driving path (210) of the vehicle (100), ascertained using driving data of the vehicle (100) and using the surroundings data, in the area in front of the vehicle (100) in the direction of travel is determined as object property,
wherein the step of determining (1120) is carried out using surroundings data from a vehicle camera, a stereo video camera, a laser device and/or a lidar device as surroundings detection device (102),
wherein a freely navigable area (601) is determined in the area in front of the vehicle (100) in the direction of travel;
selecting an object as target object (200) if the at least one object property of the object satisfies at least one target object criterion; and
generating (1140) the control parameter as a function of the at least one object property of the object (200, 300),
wherein a target object-related control parameter is generated as a function of the at least one object property of the target object (200), wherein an object position of an object (200, 300) within, outside of or at the edge of the freely navigable area (601), taking account of the driving path (210), is used to control a speed of the vehicle (100) by means of the control parameter, this resulting in a target speed reduction when passing a stationary vehicle, taking account of the freely navigable area (601).

2. Method (1100) according to Claim 1, wherein the step of determining (1120) involves determining an object class of the object (200, 300) as object property using the surroundings data, wherein the object class represents a further vehicle or an obstacle.

3. Method (1100) according to either of the preceding claims, wherein the step of generating (1140) involves generating the control parameter as a function of the vehicle position of the vehicle (100) with respect to the roadway (230) in the area in front of the vehicle (100) in the direction of travel and/or as a function of captured driving data of the vehicle (100).

4. Method (1100) according to any of the preceding claims, comprising a step of providing the control parameter to an interface with a speed regulating device (106) of the vehicle (100).

5. Apparatus (110) for generating a control parameter for an image-based distance assistance system of a vehicle (100), wherein the apparatus (110) is designed to perform the steps of a method (1100) according to any of Claims 1 to 4.

6. Computer program product comprising program code for performing a method (1100) according to any of Claims 1 to 4 when the program is executed on an apparatus (110).

## Revendications

1. Procédé (1100) pour générer un paramètre de commande pour un système d'assistance à la distance basé sur l'image d'un véhicule (100), le procédé (1100) pouvant être mis en oeuvre en association avec un véhicule (100) qui comprend un dispositif de détection d'environnement (102) orienté dans la direction de déplacement du véhicule (100), le procédé (1100) comprenant les étapes suivantes :
détermination (1120) d'au moins une propriété d'objet d'un objet (200, 300) dans une zone devant le véhicule (100) dans la direction de déplacement en utilisant des données d'environnement provenant du dispositif de détection d'environnement (102),
l'au moins une propriété d'objet représentant un état de mouvement et une position d'objet de l'objet (200, 300) par rapport à une position de véhicule du véhicule (100) et/ou par rapport à une voie de circulation (230) dans la zone devant le véhicule (100) dans la direction de déplacement,
l'état de mouvement de l'objet (200, 300) représentant un mouvement, un arrêt ou une accélération de l'objet (200, 300),
la position d'objet de l'objet (200, 300) par rapport à une limite de voie de circulation (231, 232) et/ou un marquage de voie de circulation (233) reconnu en utilisant les données d'environnement étant déterminée en tant que propriété d'objet dans la zone devant le véhicule (100) dans la direction du déplacement,
la position d'objet de l'objet (200, 300) par rapport à un corridor de circulation (210) du véhicule (100), identifié en utilisant des données de déplacement du véhicule (100) ainsi qu'en utilisant les données d'environnement, étant déterminée en tant que propriété d'objet dans la zone devant le véhicule (100) dans la direction de déplacement,
l'étape de détermination (1120) étant exécutée en utilisant des données d'environnement provenant d'une caméra de véhicule, d'une caméra vidéo stéréo, d'un dispositif laser et/ou d'un dispositif lidar en tant que dispositif de détection d'environnement (102),
une zone librement praticable (601) étant déterminée dans la zone devant le véhicule (100) dans la direction de déplacement ;
sélection d'un objet en tant qu'objet cible (200) lorsque l'au moins une propriété d'objet de l'objet satisfait au moins un critère d'objet cible ; et
génération (1140) du paramètre de commande en fonction de l'au moins une propriété d'objet de l'objet (200, 300),
un paramètre de commande relatif à l'objet cible étant généré en fonction de l'au moins une propriété d'objet de l'objet cible (200), une position d'objet d'un objet (200, 300) à l'intérieur, à l'extérieur ou au niveau du bord de la zone librement praticable (601) étant utilisée en tenant compte du corridor de conduite (210), afin de contrôler une vitesse du véhicule (100) au moyen du paramètre de commande, une réduction de la vitesse cible étant obtenue lors du passage à côté d'un véhicule à l'arrêt en tenant compte de la zone librement praticable (601).

2. Procédé (1100) selon la revendication 1, une classe d'objet de l'objet (200, 300) étant déterminée à l'étape de détermination (1120) en utilisant les données d'environnement en tant que propriété d'objet, la classe d'objet représentant un véhicule supplémentaire ou un obstacle.

3. Procédé (1100) selon l'une des revendications précédentes, le paramètre de commande étant généré, à l'étape de génération (1140), en fonction de la position de véhicule du véhicule (100) par rapport à la voie de circulation (230) dans la zone devant le véhicule (100) dans la direction de circulation et/ou en fonction de données de déplacement détectées du véhicule (100).

4. Procédé (1100) selon l'une des revendications précédentes, comprenant une étape de fourniture du paramètre de commande à une interface vers un dispositif de régulation de vitesse (106) du véhicule (100).

5. Arrangement (110) destiné à générer un paramètre de commande pour un système d'assistance à la distance basé sur l'image d'un véhicule (100), l'arrangement (110) étant configuré pour exécuter les étapes d'un procédé (1100) selon l'une des revendications 1 à 4.

6. Produit de programme informatique comprenant un code de programme destiné à mettre en oeuvre un procédé (1100) selon l'une des revendications 1 à 4 lorsque le programme est exécuté sur un arrangement (110).
